# EUROPEAN PATENT APPLICATION

(11) **EP 4 181 257 A1**
(43) Date of publication of application: **17.05.2023**
(21) Application number: 21952107.7
(22) Date of filing: 02.09.2021
(51) Int. Cl.: H01M 10/052

(54) **INSULATING FILM, BATTERY CELL, BATTERY, PREPARATION METHOD AND DEVICE, AND POWER CONSUMING DEVICE**

(71) Applicant: Contemporary Amperex Technology Co., Limited, Ningde, Fujian 352100 (CN)
(72) Inventor: LIU, Qiang, Ningde City, Fujian 352100 (CN); HUAGN, Yaping, Ningde City, Fujian 352100 (CN); ZHANG, Xiaowen, Ningde City, Fujian 352100 (CN)
(74) Representative: Herrmann, Uwe
(86) International application number: PCT/CN2021/116293
(87) International publication number: WO 2023/028959

(57) **Abstract**

Embodiments of the present application provide an insulating film, a battery cell (400), a battery, a method for preparing a battery cell (400), a device (600) for preparing a battery cell (400), and an electrical device, wherein the insulating film includes a bottom coverage region (210) and a plurality of alternately arranged first side coverage regions (220) and second side coverage regions (230); the plurality of first side coverage regions (220) and second side coverage regions (230) are all located on the same side of the bottom coverage region (210) to form an accommodating space; the first side coverage region (220) includes a bottom masking portion (221) and two side overlapping portions (222) stacked on the bottom masking portion (221); a first guide groove (310) is formed at the junction of the bottom masking portion (221) and the side overlapping portion (222), a second guide groove (320) corresponding to the first guide groove (310) is arranged on the side overlapping portion (222), the second guide groove (320) intersects with the first guide groove (310), and the second guide groove (320) is set to incline downward. The present application can achieve the purpose of preventing liquid from being sucked back and infiltrating between the insulating film and the case.

## Description

### Technical Field

The present application relates to the field of battery technology, and in particular, to an insulating film, a battery cell, a battery, a method for preparing a battery cell, a device for preparing a battery cell, and an electrical device.

### Background Art

With the increasing environmental pollution, the new energy industry has attracted more and more attention. The rechargeable lithium-ion secondary battery has become an important part of many electronic products, energy storage products and electric vehicles. Its performance will directly affect the promotion and use of these products.

For lithium-ion batteries, in order to prevent water vapor from infiltrating into the battery cells, an insulating film is usually used to enclose the battery cell.

However, in the process of enclosing using the insulating film, a crease will be formed at the folded position, and a gap will be formed at the crease, which easily leads to capillary action. Especially when the crease at the bottom comes into contact with the liquid, it is easy for the liquid to climb up through the crease, and when reaching the end of the crease, the liquid will infiltrate between the insulating film and the case, making the waterproof effect ineffective.

### Summary of the Invention

The present application provides an insulating film, a battery cell, a battery, a method for preparing a battery cell, a device for preparing a battery cell, and an electrical device, which can prevent the liquid from being sucked back and infiltrating between the insulating film and the case.

A first aspect of the present application provides an insulating film; the insulating film includes a bottom coverage region and a plurality of alternately arranged first side coverage regions and second side coverage regions, the total number of the first side coverage regions and second side coverage regions is equal to the number of sides of the bottom coverage region, and each side of the bottom coverage region is connected with one of the first side coverage regions or one of the second side coverage regions; wherein, the plurality of the first side coverage regions and second side coverage regions are located on the same side of the bottom coverage region to form an accommodating space;
the first side coverage region includes a bottom masking portion and two side overlapping portions, the bottom edge of the bottom masking portion is connected with one side of the bottom coverage region, and the two side overlapping portions are stacked on the bottom masking portion, and are respectively connected with the two second side coverage regions on both sides of the bottom masking portion; and
a first guide groove is formed at the junction of the bottom masking portion and the side overlapping portion, and a second guide groove corresponding to the first guide groove is arranged on the side overlapping portion, the second guide groove intersects with the first guide groove, and the second guide groove is set to incline downward.

The junction of the bottom masking portion and the side overlapping portion is at the crease position where the liquid will climb up along the first guide groove. When the liquid climbs up to the top of the first guide groove, it will change its flowing direction along the second guide groove inclined downward, so that the liquid sucked back from the bottom can be re-directed to the bottom through the second guide groove, thereby achieving the effect of directional drainage, preventing the liquid from entering the space between the battery cell and the insulating film, preventing the liquid from infiltrating into the surface of the case of the battery cell, and improving the waterproof effect of the insulating film.

In some embodiments, the second guide groove forms a preset angle with the first guide groove.

In some embodiments, the preset angle is less than 90 degrees.

The second guide groove forms a preset angle with the first guide groove, and the above-mentioned preset angle needs to be less than 90 degrees, so that the second guide groove is inclined downward to guide the liquid sucked from the first guide groove to the bottom of the insulating film, thereby avoiding the liquid from infiltrating into the accommodating space of the insulating film.

In some embodiments, the bottom masking portion is a trapezoid, and the length of the bottom edge of the bottom masking portion is greater than the length of the top edge of the bottom masking portion to make the first guide grooves inclined.

The first guide groove is arranged obliquely, which can reduce the capillary action and slow down the speed of the liquid climbing up along the first guide groove.

In some embodiments, the bottom cover is an isosceles trapezoid.

The isosceles trapezoid can maintain the symmetry of the two side overlapping portions on either side of the bottom masking portion.

In some embodiments, the side overlapping portion includes: a triangular region and a connecting region; wherein,
the triangular region is covered on the bottom masking portion, and the connecting region is covered on the triangular region;
the first side of the triangular region is connected with a side edge of the bottom masking portion to form the first guide groove, the second side of the triangular region forms the second guide groove, and the third side of the triangular region is connected with one side of the connecting region; and
the other side of the connecting region is connected with the adjacent second side coverage region.

The above-mentioned triangular region is a key component for forming the second guide groove and the first guide groove, and the triangular region also plays the role of connecting the bottom masking portion and the connecting region.

In some embodiments, the third side of the triangular region and one side of the corresponding connecting region are equal in length, and are aligned and connected.

As a result, the triangular region and the connecting region are connected integrally, which improves the integrity and leakproofness of the insulating film.

In some embodiments, the side of the connecting region connecting the triangular region intersects with the side connecting the second side coverage region.

As a result, the triangular region, the connecting region and the second side coverage region are seamlessly connected, ensuring the integrity of the side overlapping portion covering the bottom masking portion, and the leakproofness of the connection between the side overlapping portion and the second side coverage region, and ensuring the leakproofness of the insulating film.

In some embodiments, an adhesive structure is provided on the side of the connecting region close to the bottom masking portion to fix the triangular region on the bottom masking portion.

In some embodiments, the bottom edge of the bottom masking portion and the corresponding side of the bottom coverage region are equal in length, and are aligned and connected; and
the bottom edge of the second side coverage region and the corresponding side of the bottom coverage region are equal in length, and are aligned and connected.

As a result, the existence of gaps between the bottom masking portion, the second side coverage region and the bottom coverage region can be avoided, thereby achieving the purpose of waterproofing.

In some embodiments, the accommodating space is used to enclose battery cells or battery modules.

In some embodiments, the inner wall of the accommodating space is bonded to the battery cell or the battery module.

In some embodiments, the material of the insulating film is a waterproof material.

According to a second aspect of the present application, provided is a battery cell including a case and the above-mentioned insulating film; wherein,
the bottom wall of the case is covered with the bottom coverage region of the insulating film, and the side walls of the case are covered with the first side coverage region and the second side coverage region of the insulating film, so that the battery cell is at least partially enclosed in the accommodating space of the insulating film.

According to a third aspect of the present application, provided is a battery which includes a plurality of the above-mentioned battery cells.

According to a fourth aspect of the present application, provided is a method for preparing a battery cell, which comprises:
providing a cell enclosed with a case; and
providing the above-mentioned insulating film for enclosing the case; wherein the bottom coverage region of the insulating film covers the bottom wall of the case, and the first side coverage region and second side coverage region of the insulating film cover the side walls of the case, so that the case is at least partially enclosed in the accommodating space of the insulating film.

According to a fifth aspect of the present application, provided is a device for preparing a battery cell, which includes:
a first apparatus used for providing a cell enclosed with a case; and
a second apparatus used for providing the above-mentioned insulating film for enclosing the case; wherein the bottom coverage region of the insulating film covers the bottom wall of the case, and the first side coverage region and second side coverage region of the insulating film cover the side walls of the case, so that the case is at least partially enclosed in the accommodating space of the insulating film.

According to a sixth aspect of the present application, provided is an electrical device including the above-mentioned battery.

### Description of Drawings

In order to illustrate the technical solutions in the embodiments of the present application or in the prior art more clearly, the drawings to be used in the embodiments of the present application or in the prior art will be briefly introduced below. Obviously, the drawings described below are some embodiments of the present application. For those of ordinary skill in the art, other drawings can also be obtained based on these drawings without any creative work.

The drawings described herein are intended to provide a further understanding of the present application, and constitute a part of the present application. The illustrative embodiments of the present application and the description thereof are for explaining the present application and do not constitute an undue limitation on the present application.
Fig. 1-A is a schematic structural diagram of an electrical device according to an embodiment of the present application.
Fig. 1-B is a schematic structural diagram of a battery according to an embodiment of the present application.
Fig. 1-C is a schematic structural diagram of a battery module according to an embodiment of the present application.
Fig. 1-D is a schematic structural diagram of a battery cell according to an embodiment of the present application.
Fig. 2 is a schematic structural diagram of an insulating film according to an embodiment of the present application.
Fig. 3 is a first schematic structural diagram of a first side coverage region in an insulating film according to an embodiment of the present application.
Fig. 4 is a second schematic structural diagram of a first side coverage region in an insulating film according to an embodiment of the present application.
Fig. 5 is a flow chart of a method for preparing a battery cell according to an embodiment of the present application.
Fig. 6 is a block diagram of a device for preparing a battery cell according to an embodiment of the present application.

### Detailed Description

In order to make the purposes, technical solutions and advantages of the present application clearer, the present application will be described in further detail below in conjunction with the drawings and embodiments. It should be understood that the specific embodiments described here are only used to explain the present application, and are the preferred embodiments of the present application, but are not intended to limit the protection scope of the present application. Therefore, all the equivalent changes made according to the structures, shapes, and principles of the present invention should be within the protection scope of the present application.

Unless otherwise defined, all technical and scientific terms used herein have the same meanings as those commonly understood by those skilled in the art to which the present application belongs. The terms used in the specification of the present application are merely for the purpose of describing specific embodiments, but are not intended to limit the present application. The terms "including" and "having" and any variations thereof in the specification and the claims of the present application as well as the description of the drawings are intended to cover non-exclusive inclusions.

Reference herein to "an embodiment" means that a particular feature, structure, or characteristic described in connection with the embodiment can be included in at least one embodiment of the present application. The appearance of the phrase "embodiment" in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the present application, the term "and/or" is only an association relationship for describing associated objects, indicating that three relationships may exist. For example, A and/or B may represent three situations: A exists alone, both A and B exist, and B exists alone. In addition, the character "/" herein generally means that the associated objects before and after it are in an "or" relationship.

Furthermore, the terms "first", "second" and the like in the specification and the claims of the present application as well as the above-mentioned description of drawings are used to distinguish different objects, rather than to describe a specific order, and one or more of these features may be explicitly or implicitly included.

In the description of the present application, unless otherwise stated, "a plurality of' means two or more (including two), and similarly, "a plurality of groups" means two or more groups (including two groups).

In the description of the present application, it should be noted that, unless otherwise expressly specified and limited, the terms "mount", "connected" and "connecting" should be understood in a broad sense, for example, "connected" or "connecting" of mechanical structures can refer to a physical connection. For example, a physical connection can be a fixed connection, such as a fixed connection through fasteners such as screws, bolts or other fasteners; a physical connection can also be a detachable connection, such as mutual clamping connection or snap-fit connection; the physical connection can also be an integrated connection, for example, connection through welding, bonding or integral forming. The "connected" or "connecting" of a circuit structure may refer not only to physical connection, but also to electrical connection or signal connection. For example, it may be direct joining, that is, physical connection, or indirect connection through at least one intermediate element, as long as the circuits are connected, and it can also be the internal connection between two elements; in addition to the signal connection through the circuit, the signal connection can also refer to the signal connection through a medium, such as radio waves. For those of ordinary skill in the art, the specific meanings of the above terms in the embodiments of the present application can be understood according to specific situations.

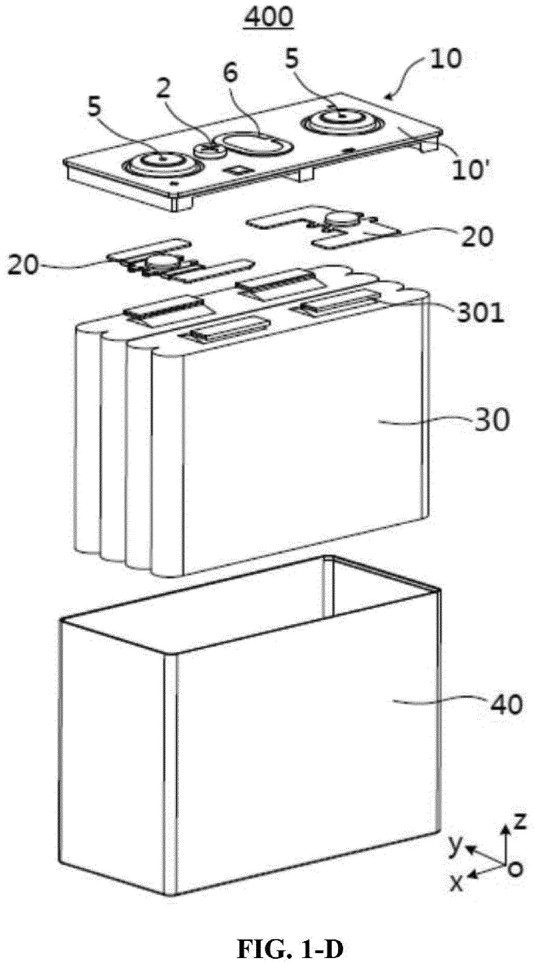

In order to clearly describe the various orientations in the following embodiments, some words of place can be used, for example, the coordinate system in Fig. 1-D defines the various orientations and directions of the battery, and the x-direction represents the length direction of the battery cell 400, the y direction is perpendicular to the x direction in the horizontal plane, indicating the width direction of the battery cell 400 , and the z direction is perpendicular to the x direction and the y direction, indicating the height direction of the battery. In addition, the indications of the above-described x-direction, y-direction, and z-direction, etc. used to describe the directions of the operation and configuration of the components of the battery of the present embodiment are not absolute but relative, and although these indications are appropriate when the components of the battery are in the positions shown in the drawings, when these positions are changed, the directions should be interpreted differently to correspond to the changes.

Based on the same understanding of orientations, in the description of the present application, the orientational or positional relationships indicated by the terms "central," "machine direction," "transverse direction," "length," "width," "thickness," "upper," "lower," "front," "rear," "left," "right," "vertical," "horizontal," "top," "bottom," "inner," "outer," "clockwise," "anticlockwise," "axial," "radial," "circumferential," etc. are based on the orientational or positional relationships shown in the drawings and are only for facilitating the description of the present application and simplifying the description, rather than indicating or implying that the apparatus or element referred to must have a particular orientation or be constructed and operated in a particular orientation, and therefore will not be interpreted as limiting the present application.

A rechargeable battery may be called a secondary battery or a power battery. Currently, widely used rechargeable batteries are lithium batteries, such as lithium-sulfur batteries, sodium-lithium-ion batteries or magnesium-ion batteries, but are not limited thereto. For the convenience of description, rechargeable batteries may be collectively referred to as batteries herein.

In the present application, a battery is generally composed of a plurality of battery cells connected together, and the battery cell may include a lithium-ion secondary battery, a lithium-ion primary battery, a lithium-sulfur battery, a sodium-lithium-ion battery, a sodium-ion battery, or a magnesium-ion battery, etc., which is not limited in the embodiments of the present application. The battery cell may be cylindrical, flat, rectangular, or of other shapes, which is also not limited in the embodiments of the present application. The battery cells are generally divided into three types according to encapsulating manners: cylindrical battery cells, rectangular battery cells, and pouch battery cells, which are not limited in the embodiments of the present application.

The battery mentioned in the embodiments of the present application refers to a single physical module including one or more battery cells to provide a higher voltage and capacity. For example, the battery mentioned in the present application may include a battery module, a battery pack, or the like. The battery typically includes a box body for encapsulating one or more battery cells. The box body can prevent liquids or other foreign matters from affecting charging or discharging of the battery cells.

The battery cells include electrode assemblies and electrolyte solutions, and each electrode assembly is composed of a positive electrode sheet, a negative electrode sheet and a separator. The battery cells work mainly relying on the movement of metal ions between the positive electrode sheet and the negative electrode sheet. The positive electrode sheet includes a positive current collector and a positive electrode active material layer, a surface of the positive current collector is coated with the positive electrode active material layer, the positive current collector not coated with the positive electrode active material layer protrudes from the positive electrode collector already coated with the positive electrode active material layer, and the positive current collector not coated with the positive electrode active material layer is used as a positive tab. Taking a lithium-ion battery as an example, the material of the positive current collector may be aluminum, and the positive electrode active material may be lithium cobalt oxide, lithium iron phosphate, ternary lithium, lithium manganate, or the like. The negative electrode sheet includes a negative current collector and a negative electrode active material layer, the surface of the negative current collector is coated with the negative electrode active material layer, the negative current collector not coated with the negative electrode active material layer protrudes from the negative electrode collector already coated with the negative electrode active material layer, and the negative current collector not coated with the negative electrode active material layer is used as a negative tab. The material of the negative electrode current collector may be copper, and the negative electrode active material may be carbon, silicon, or the like. In order to ensure that no fusing occurs when a large current passes, there are a plurality of positive tabs which are stacked together, and there are a plurality of negative tabs which are stacked together. The material of the separator may be polypropylene (PP), polyethylene (PE), or the like. In addition, the electrode assembly may be of a wound structure or a laminated structure, which is not limited in the embodiments of the present application.

The batteries in the embodiments of the present application can be applied to various electrical devices that use electrical energy as the power source. The electrical device here can be, but not limited to, electric vehicles, electric trains, electric bicycles, golf carts, drones, or ships. In addition, the electrical device may be a apparatus powered only by a battery, or a hybrid apparatus. The battery provides electrical energy for the electrical device, and drives the electric apparatus to travel through the motor.

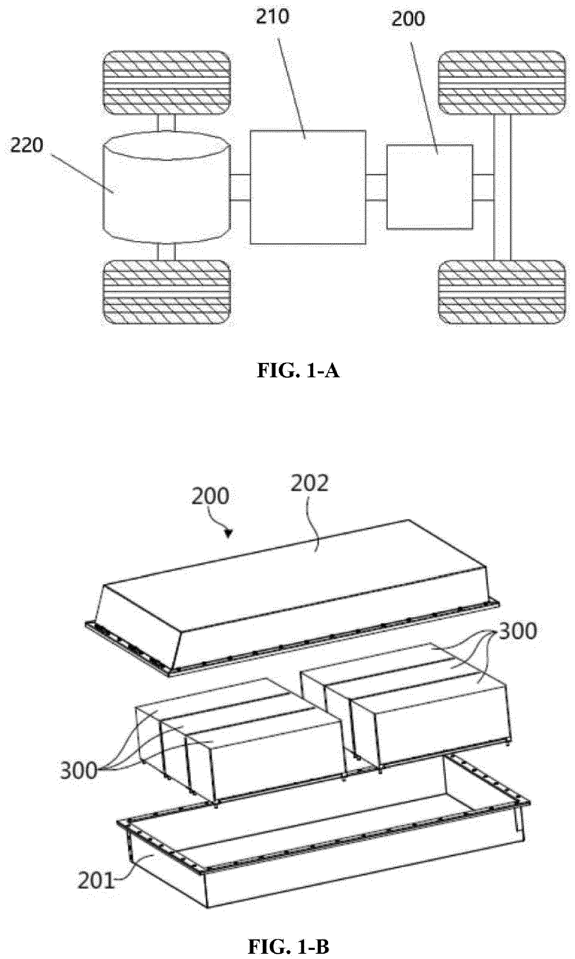

For example, as shown in Fig. 1-A, which is a schematic structural diagram of an electrical device according to an embodiment of the present application, the electrical device may be a vehicle, which may be a fuel vehicle, a gas vehicle or a new-energy vehicle. The new-energy vehicle may be an all-electric vehicle, a hybrid electric vehicle, an extended-range electric vehicle, etc. The vehicle includes a battery 200, a controller 210 and a motor 220. The battery 200 is configured to supply power to the controller 210 and the motor 220 and act as the operating power source and driving power source of the vehicle. For example, the battery 200 is configured to meet the working power requirements of the vehicle during starting, navigating and running. For example, the battery 200 supplies power to the controller 210, the controller 210 controls the battery 200 to supply power to the motor 220, and the motor 220 receives and uses the power from the battery 200 as the driving power of the vehicle, replacing or partially replacing the driving power provided by the fuel or natural gas for the vehicle.

In order to enable the battery to achieve a higher capacity to meet use requirements, the battery 200 may include a plurality of battery modules that are electrically connected with each other. As shown in Fig. 1-B, the battery 200 includes a first box body 201, a second box body 202 and a plurality of battery modules 300, wherein the first box body 201 and the second box body 202 are fastened to each other, and a plurality of battery modules 300 are arranged in the space enclosed by the first box body 201 and the second box body 202. In some embodiments, the first box body 201 and the second box body 202 are hermetically connected.

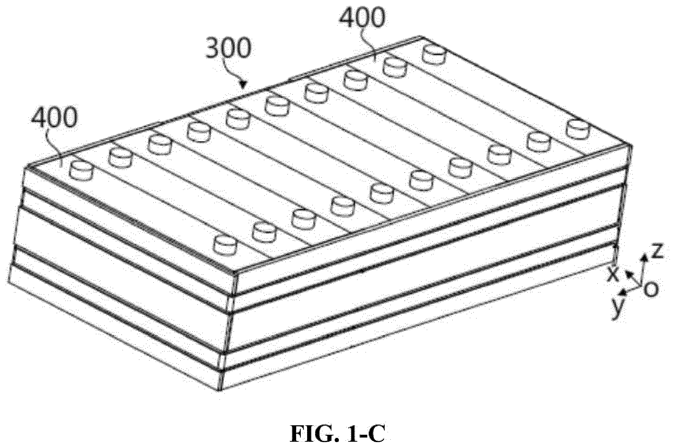

As shown in Fig. 1-C, the battery module 300 includes a plurality of battery cells 400, the plurality of battery cells 400 may be electrically connected in series, in parallel, or in parallel-series to achieve a higher electrical current or voltage, wherein the parallel-series connection refers to a combination of series connection and parallel connection. For example, as shown in Fig. 1-C, the battery cell 400 can be placed vertically, the height direction of the battery cell 400 is consistent with the z direction, the length direction of the battery cell 400 is consistent with the x direction, and a plurality of battery cells 400, along their width direction, are arranged side by side in the y direction; alternatively, the battery cell 400 can be laid horizontally, the width direction of the battery cell 400 is consistent with the z direction, the length direction of the battery cell 400 is consistent with the x direction, and a plurality of battery cells 400 can be stacked into at least one layer along the z direction, and each layer includes a plurality of battery cells 400 spaced along the x-direction.

In order for those skilled in the art to clearly understand the improvements in the present application, the overall structure of the battery cell 400 is first described.

As shown in Fig. 1-D, the battery cell 400 includes a case 40, an electrode assembly 30, and an end cover assembly 10. The end cover assembly 10 includes an end cover plate 10', the end cover plate 10' is connected with the case 40 (e.g., by welding) to form the shell of the battery cell 400, the electrode assembly 30 is disposed in the case 40, and the case 40 is filled with an electrolyte solution. The battery cell 400 may be of a cubic or cuboid shape.

According to the actual use requirements, there can be one or more electrode assemblies 30. As shown in Fig. 1-D, at least two independently wound electrode assemblies 30 may be provided in the battery. The electrode assembly 30 may be formed by winding or stacking a first electrode sheet, a second electrode sheet, and a separator between adjacent first and second electrode sheets to form a main body, wherein the separator is an insulator between adjacent first and second electrode sheets. In the embodiment, the first electrode sheet is exemplified as a positive electrode sheet and the second electrode sheet as a negative electrode sheet for description. The positive electrode active material is coated on the coating region of the positive electrode sheet, and the negative electrode active material is coated on the coating region of the negative electrode sheet. A plurality of uncoating regions extending from the coating region of the main body are stacked as tabs. The electrode assembly 30 includes two tabs 301, that is, a positive tab and a negative tab. The positive tab extends from the coating region of the positive electrode sheet, and the negative tab extends from the coating region of the negative electrode sheet.

The end cover assembly 10 is arranged at the top of the electrode assembly 30. As shown in Fig. 1-D, the end cover assembly 10 includes an end cover plate 10' and two electrode terminals 5, i.e., two electrode terminals 5 are a positive electrode terminal and a negative electrode terminal respectively. Each electrode terminal 5 is provided with a corresponding connecting member 20, and the connecting member 20 is located between the end cover plate 10' and the electrode assembly 30.

For example, in Fig. 1-D, the tab 301 of the electrode assembly 30 is at the top, the positive tab is connected with the positive electrode terminal through a connecting member 20, and the negative tab is connected with the negative electrode terminal through another connecting member 20. Optionally, the battery cell 400 may include two end cover assemblies 10, each located at either end of the case 40, and each end cover assembly 10 is provided with an electrode terminal 5.

An explosion-proof member may also be arranged on the end cover plate 10' to release the gas in the battery cell 400 in time when there is too much gas in the battery cell 400 to avoid explosion.

The end cover plate 10' is provided with an exhaust vent, and the exhaust vent can be arranged in the middle of the end cover plate 10' along the length direction. The explosion-proof member includes a pressure relief mechanism 6. The pressure relief mechanism 6 is arranged on the exhaust vent. Under normal conditions, the pressure relief mechanism 6 is hermetically installed on the exhaust vent. When the battery cell 400 expands and the pressure inside the shell rises to exceed the preset value, the pressure relief mechanism 6 is actuated to open, and the gas is released outward through the pressure relief mechanism 6.

In some embodiments, as shown in Fig. 1-D, the end cover plate 10' is provided with a through hole for injecting the electrolyte solution into the battery cell 400, and the through hole can be round, elliptical, polygonal or of other shapes, and can extend along the height direction of the end cover plate 10'. The end cover plate 10' is provided with a liquid injection member 2 for closing the through hole.

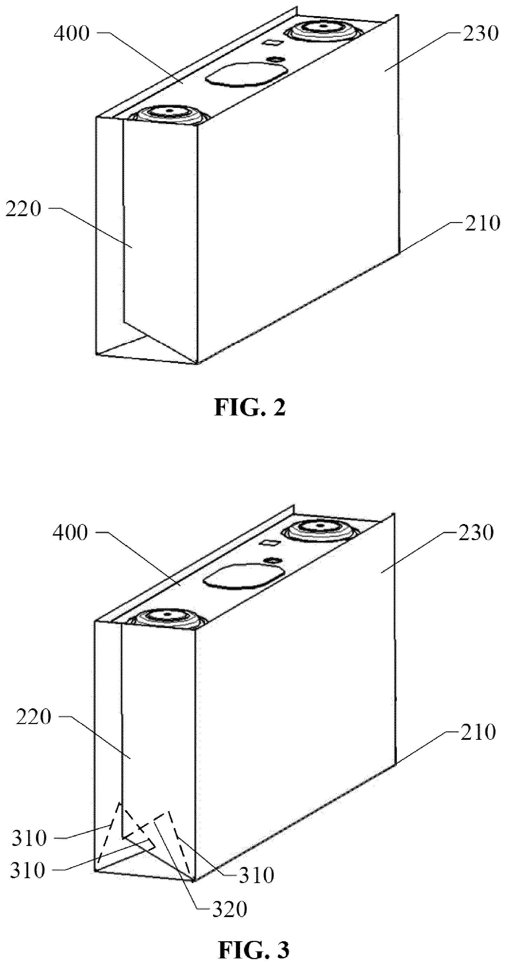

As shown in Fig. 2 to Fig. 4, an embodiment of the present application provides an insulating film for enclosing a battery cell 400. The insulating film includes a bottom coverage region 210 and a plurality of alternately arranged first side coverage regions 220 and second side coverage region 230, the bottom coverage region 210 is used to cover the bottom of the battery cell 400; the plurality of alternately arranged first side coverage regions 220 and second side coverage region 230 are used to cover the side surface of the battery cell 400. The total number of the first side coverage regions 220 and second side coverage regions 230 is equal to the number of sides of the bottom coverage region 210, and each side of the bottom coverage region 210 is connected with a first side coverage region 220 or a second side coverage region 230, so as to ensure that the bottom coverage region 210 can be seamlessly connected with the first side coverage region 220 and the second side coverage region 230.

In the embodiments of the present application, the plurality of first side coverage regions 220 and second side coverage regions 230 are all located on the same side of the bottom surface coverage region 210 to form an accommodating space. As shown in Fig. 2, the accommodating space is used to accommodate the battery cell 400.

In the embodiments of the present application, the first side coverage region 220 includes a bottom masking portion 221 and two side overlapping portions 222, wherein the bottom edge of the bottom masking portion 221 is connected with one side of the bottom coverage region 210, so as to realize the connection of the bottom coverage region 210 with the first side coverage region 220; the two side overlapping portions 222 are stacked on the bottom masking portion 221, and are respectively connected with the two second side coverage regions 230 on either side of the bottom masking portion 221, so as to realize the connection of the first side coverage region 220 with the second side coverage region 230.

Further, the two side overlapping portions 222 stacked on the bottom masking portion 221 are at least partially overlapped, so that the bottom of the resulting accommodating space is sealed, thereby providing a waterproof effect.

In order to prevent capillary action at the crease position, which can cause the liquid to be sucked back into the accommodating space, in the insulating film provided by the embodiment of the present application, a first guide groove 310 is formed at the junction of the bottom masking portion 221 and the side overlapping portion 222, and the side overlapping portion 222 is provided with a second guide groove 320 corresponding to the first guide groove 310 , the second guide groove 320 intersects with the first guide groove 310, and the second guide groove 320 is inclined downward.

As shown in Fig. 3, the junction of the bottom masking portion 221 and the side overlapping portion 222 is at the crease position where the liquid will climb up along the first guide groove 310. When the liquid climbs up to the top of the first guide groove 310, it will change its flowing direction along the second guide groove 320 inclined downward, so that the liquid sucked back from the bottom can be re-directed to the bottom through the second guide groove 320, thereby achieving the effect of directional drainage, preventing the liquid from entering the space between the battery cell 400 and the insulating film, preventing the liquid from infiltrating into the surface of the case of the battery cell 400, and improving the waterproof effect of the insulating film.

In the embodiments of the present application, the second guide groove 320 forms a preset angle with the first guide groove 310, and the above-mentioned preset angle needs to be less than 90 degrees, so that the second guide groove 320 is inclined downward to guide the liquid sucked from the first guide groove 310 to the bottom of the insulating film, thereby avoiding the liquid from infiltrating into the accommodating space of the insulating film. In practical applications, the value of the preset angle determines the degree of inclination of the second guide groove 320 and the first guide groove 310, and the degree of inclination determines the drainage effect. The greater the degree of inclination of the second guide groove 320 and the first guide groove 310, the better the drainage effect.

In order to further reduce capillary action, in the embodiments of the present application, the bottom masking portion 221 is a trapezoid, and the length of the bottom edge of the bottom masking portion 221 is greater than the length of the top edge of the bottom masking portion 221, so that the first guide groove 310 is inclined, thereby reducing capillary action and slowing down the speed of the liquid climbing up along the first guide groove 310.

In order to maintain the symmetry of the two side overlapping portions 222 on either side of the bottom masking portion 221, in the embodiments of the present application, the above-mentioned inverted trapezoid is an isosceles trapezoid.

In the embodiments of the present application, in order to form the above-mentioned second guide groove 320 and first guide groove 310, the side overlapping portion 222 includes a triangular region 2221 and a connecting region 2222, wherein the triangular region 2221 covers the bottom masking portion 221, the connecting region 2222 covers the triangular region 2221, the first side of the triangular region 2221 is connected with a side edge of the bottom masking portion 221 to form the first guide groove 310, and the second side of the triangular region 2221 forms the second guide groove 320, the third side of the triangular region 2221 is connected with one side of the connecting region 2222; and the other side of the connecting region 2222 is connected with the adjacent second side coverage region 230.

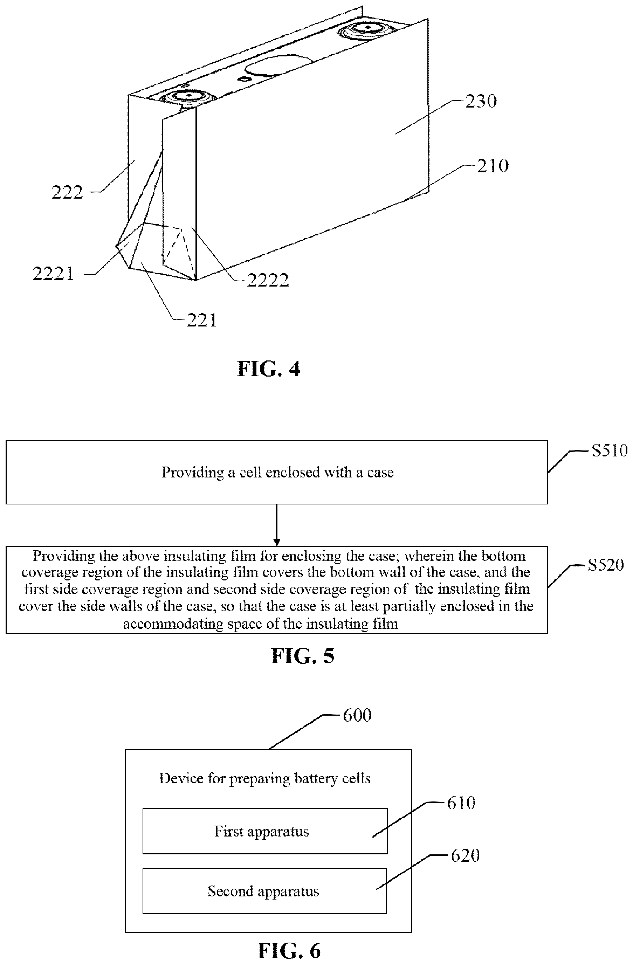

From Fig. 3 and Fig. 4, it can be seen that the above-mentioned triangular region 2221 is a key component for forming the second guide groove 320 and the first guide groove 310, and the triangular region 2221 also serves to connect the bottom masking portion 221 and the connecting region 2222. Also, the third side of the triangular region 2221 and the corresponding side of the connecting region 2222 are equal in length, and are aligned and connected, so that the triangular region 2221 and the connecting region 2222 are connected integrally, which improves the integrity and leakproofness of the insulating film.

As shown in Fig. 4 , the side of the connecting region 2222 connecting the triangular region 2221 intersects with the side connecting the second side coverage region 230, that is, the third side of the triangular region 2221 intersects with the side of the second side coverage region 230, thereby making the triangular region 2221, the connecting region 2222 and the second side coverage region 230 seamlessly connected, ensuring the integrity of the side overlapping portion 222 covering the bottom masking portion 221 and the leakproofness of the connection of the side overlapping portion 222 and the second side coverage region 230, and ensuring the leakproofness of the insulating film.

The first side coverage region 220 including the bottom masking portion 221 and the two side overlapping portions 222, and the second side coverage region 230 are alternately arranged on the same side of the bottom coverage region 210; and the bottom masking portion 221 and the adjacent second side coverage regions 230, in conjunction with the bottom coverage region 210, can form an accommodating space for accommodating battery cells. In addition, the two side overlapping portions 222 are stacked on the bottom masking portion 221, and the two side overlapping portions 222 are respectively connected with the adjacent second side coverage regions 230, therefore achieving an effect of sealing the accommodating space, which improves the waterproof performance of the insulating film and achieves the purpose of making the battery waterproof.

In practical applications, the above connection mode and stacking mode can be determined according to the actual situation. For example, the bottom masking portion 221 and the second side coverage region 230 are respectively connected with the bottom coverage region 210 integrally, the bottom masking portion 221 is connected with the triangular region 2221 integrally, the triangular region 2221 is connected with the connecting region 2222 integrally, and the connecting region 2222 is connected with the second side coverage regions 230 integrally; in addition, the side of the connecting region 2222 close to the bottom coverage region 221 is provided with an adhesive structure to fix the triangular region 2221 on the bottom masking portion 221.

In the embodiments of the present application, in order to facilitate fixing the battery cell 400 in the accommodating space of the insulating film, an adhesive structure may be provided on the side of the insulating film close to the accommodating space to bond the insulating film onto the battery cell 400. Of course, any other manners that can realize the fixed connection between the battery cell 400 and the insulating film fall within the protection scope of the present application.

Similarly, in order to improve the waterproofness of the insulating film and ensure the integration of various components in the insulating film, the bottom edge of the bottom masking portion 221 and the corresponding side of the bottom coverage region 210 are equal in length, and are aligned and connected; and the bottom edge of the second side coverage region 230 and the corresponding side of the bottom coverage region 210 are equal in length, and are aligned and connected. As a result, the existence of gaps between the bottom masking portion 221, the second side coverage region 230 and the bottom coverage region 210 can be avoided, thereby achieving the purpose of waterproofing.

In the embodiments of the present application, the height of the insulating film is greater than the height of the battery cell 400. Specifically, the height of the connecting region 2222 and the second side covering region 230 is greater than the height of the battery cell 400, thereby achieving the purpose of waterproofing along the height direction for the whole battery cell 400.

In practical applications, in addition to the connections between different parts inside the insulating film, the inner wall of the accommodating space in the insulating film also needs to be bonded and connected with the battery cells 400, so that the insulating film and the battery cells 400 can be relatively fixed. The specific bonding positions and bonding methods are not particularly limited in the embodiments of the present application.

In the embodiments of the present application, in addition to enclosing the battery cells 400, the accommodating space of the insulating film can also enclose a battery module 300 composed of a plurality of battery cells, and the plurality of battery cells 400 can be connected in different ways.

In actual enclosing of the battery module 300, the bottom coverage region 210 of the insulating film covers the bottom of the battery module 300; the plurality of first side coverage regions 220 and second side coverage regions 230 cover the sides of the battery module 300, and the battery module 300 is enclosed in the accommodating space.

The specific structure of the insulating film is the same as that for enclosing the battery cell 400, which will not be explained here. In addition, the inner wall of the accommodating space in the insulating film also needs to be bonded and connected with the battery module 300 to realize the relative fixing between the insulating film and the battery module 300.

In the embodiments of the present application, the battery cell 400 or the battery module 300 is enclosed with the insulating film, which provides not only an insulating effect, but also a waterproof effect, and also features low cost and small occupied space. In addition, by providing the second guide groove 320 and the first guide groove 310, even if the liquid at the bottom climbs up through the first guide groove 310, after it reaches the junction of the first guide groove 310 and the second guide groove 320, under the action of gravity and the capillary action of the second guide groove 320, the climbing direction of the liquid is changed and the liquid flows down to the bottom along the second guide groove 320, thereby preventing the liquid from infiltrating into the surface of the case of the battery cell 400 or the battery module 300 and avoiding corrosion of the case.

It should be emphasized that the material of the insulating film is a waterproof material. For example, the insulating film is composed of a substrate and an adhesive layer, wherein the substrate can be polyethylene, polypropylene, polyethylene terephthalate, polyamide, styrene-acrylate copolymer, polystyrene, polyamide and other high molecular materials; the adhesive layer can be acrylate, epoxy resin, polyurethane, amino resin, phenolic resin and other high molecular materials.

In practical applications, the thickness of the insulating film may be 25 to 400 um, the thickness of the optional substrate may be 20 to 200 um, such as 50 um, and the thickness of the adhesive layer may be 5 to 200 um, such as 20 um.

In another aspect, an embodiment of the present application also provides a battery cell. The battery cell 400 includes a case and the above-mentioned insulating film, and as shown in Fig. 2, the bottom wall of the case is covered with the bottom coverage region 210 of the insulating film, the side walls of the case are covered with the first side coverage region 220 and the second side coverage region 230 of the insulating film, so that the battery cell 400 is at least partially enclosed in the accommodating space of the insulating film. The specific structure and arrangement position of the insulating film have been described in detail in the above-mentioned embodiments, which will not be repeated in this embodiment.

In another aspect, the present application further provides a battery which includes a plurality of the above-mentioned battery cells 400. The specific structure of the battery cell 400 has been described in detail in the above-mentioned embodiments, which will not be repeated in this embodiment.

To sum up, in the battery provided by the embodiments of the present application, by arranging the above-mentioned battery cells, the case of the battery cell is covered with the insulating film outside, which, in addition to an insulating effect, provides capillary action, thereby improving the waterproof effect of the insulating film.

In another aspect, the present application also provides a method for preparing a battery cell. As shown in Fig. 5, the method for preparing a battery cell may include the following steps:
Step S510, providing a cell enclosed with a case;
Step S520, providing the above-mentioned insulating film for enclosing the case; wherein the bottom coverage region of the insulating film covers the bottom wall of the case, and the first side coverage region and second side coverage region of the insulating film cover the side walls of the case, so that the case is at least partially enclosed in the accommodating space of the insulating film.

The specific details of the above-mentioned method for preparing battery cells have been described in detail in the corresponding battery cell and insulating film embodiments, so they will not be repeated here.

In another aspect, the present application also provides a device for preparing a battery cell. Referring to Fig. 6, a block diagram of a device for preparing a battery cell according to an embodiment of the present application is shown. As shown in Fig. 6, the device 600 for preparing a battery cell may include:
a first apparatus 610 used for providing a cell enclosed with a case;
a second apparatus 620 used for providing the above-mentioned insulating film for enclosing the case; wherein the bottom coverage region of the insulating film covers the bottom wall of the case, and the first side coverage region and second side coverage region of the insulating film cover the side walls of the case, so that the case is at least partially enclosed in the accommodating space of the insulating film.

The specific details of the above-mentioned device for preparing battery cells have been described in the corresponding battery cell and insulating film embodiments, so they will not be repeated here.

In another aspect, the present application further provides an electrical device including the afore-mentioned battery; the battery is used for providing electric energy. The specific structure and working principle of the battery have been described in detail in the above-mentioned embodiments, which will not be repeated in this embodiment.

The above-mentioned protected subjects and the features in the embodiments of the present application can draw reference from each other. Where the structure permits, those skilled in the art can also flexibly combine the technical features in different embodiments to form more embodiments.

The above provides a detailed introduction to an insulating film, a battery cell, a battery, a method for preparing a battery cell, a device for preparing a battery cell, and an electrical device provided by the present application. The principles and embodiments of the present application are described herein by using specific embodiments, and the descriptions of the above embodiments are only used to help understand the methods and core ideas of the present application. It should be noted that those of ordinary skill in the art may further make numerous variations and improvements to the present application without departing from the principle of the present application, and all the variations and improvements fall within the protection scope of the claims of the present application.

## Claims

1. An insulating film, wherein the insulating film includes a bottom coverage region and a plurality of alternately arranged first side coverage regions and second side coverage regions, the total number of the first side coverage regions and second side coverage regions is equal to the number of sides of the bottom coverage region, and each side of the bottom coverage region is connected with one of the first side coverage regions or one of the second side coverage regions; wherein,
the plurality of the first side coverage regions and second side coverage regions are all located on the same side of the bottom coverage region to form an accommodating space;
the first side coverage region includes a bottom masking portion and two side overlapping portions, the bottom edge of the bottom masking portion is connected with one side of the bottom coverage region, and the two side overlapping portions are stacked on the bottom masking portion, and are respectively connected with the two second side coverage regions on both sides of the bottom masking portion; and
a first guide groove is formed at the junction of the bottom masking portion and the side overlapping portion, and a second guide groove corresponding to the first guide groove is arranged on the side overlapping portion, the second guide groove intersects with the first guide groove, and the second guide groove is set to incline downward.

2. The insulating film according to claim 2, wherein the second guide groove forms a preset angle with the first guide groove.

3. The insulating film according to claim 2, wherein the preset angle is less than 90 degrees.

4. The insulating film according to any one of claims 1 to 3, wherein the bottom masking portion is a trapezoid, and the length of the bottom edge of the bottom masking portion is greater than the length of the top edge of the bottom masking portion to make the first guide grooves inclined.

5. The insulating film according to claim 4, wherein the bottom masking portion is an isosceles trapezoid.

6. The insulating film according to claim 1, wherein the side overlapping portion includes: a triangular region and a connecting region; wherein,
the triangular region is covered on the bottom masking portion, and the connecting region is covered on the triangular region;
the first side of the triangular region is connected with a side edge of the bottom masking portion to form the first guide groove, the second side of the triangular region forms the second guide groove, and the third side of the triangular region is connected with one side of the connecting region; and
the other side of the connecting region is connected with the adjacent second side coverage region.

7. The insulating film according to claim 6, wherein the third side of the triangular region and the corresponding side of the connecting region are equal in length, and are aligned and connected.

8. The insulating film according to claim 6, wherein the side of the connecting region connecting the triangular region intersects with the side connecting the second side coverage region.

9. The insulating film according to any one of claims 6 to 8, wherein an adhesive structure is provided on the side of the connecting region close to the bottom masking portion to fix the triangular region on the bottom masking portion.

10. The insulating film according to claim 1, wherein the bottom edge of the bottom masking portion and the corresponding side of the bottom coverage region are equal in length, and are aligned and connected; and
the bottom edge of the second side coverage region and the corresponding side of the bottom coverage region are equal in length, and are aligned and connected.

11. The insulating film according to claim 1, wherein the accommodating space is used for enclosing a battery cell or a battery module.

12. The insulating film according to claim 11, wherein the inner wall of the accommodating space is bonded to the battery cell or the battery module.

13. The insulating film according to claim 1, wherein the material of the insulating film is a waterproof material.

14. A battery cell, comprising a case and the insulating film of any one of claims 1 to 13; wherein,
the bottom wall of the case is covered with the bottom coverage region of the insulating film, and the side walls of the case are covered with the first side coverage region and the second side coverage region of the insulating film, so that the battery cell is at least partially enclosed in the accommodating space of the insulating film.

15. A battery, comprising a plurality of battery cells of claim 14.

16. A method for preparing a battery cell, including:
providing a cell enclosed with a case; and
providing the insulating film of any one of claims 1 to 13 for enclosing the case; wherein the bottom coverage region of the insulating film covers the bottom wall of the case, and the first side coverage region and second side coverage region of the insulating film cover the side walls of the case, so that the case is at least partially enclosed in the accommodating space of the insulating film.

17. A device for preparing battery cell, comprising:
a first apparatus used for providing a cell enclosed with a case; and
a second apparatus used for providing the insulating film of any one of claims 1 to 13 for enclosing the case; wherein the bottom coverage region of the insulating film covers the bottom wall of the case, and the first side coverage region and second side coverage region of the insulating film cover the side walls of the case, so that the case is at least partially enclosed in the accommodating space of the insulating film.

18. An electrical device, comprising the battery of claim 15.
